# EUROPEAN PATENT APPLICATION

(11) **EP 3 978 581 A1**
(43) Date of publication of application: **06.04.2022**
(21) Application number: 20306135.3
(22) Date of filing: 30.09.2020
(51) Int. Cl.: C09K 8/54, C09K 8/584, C23F 11/14

(54) **AMIDE COMPOSITION AND USE AS EMULSIFIER AND CORROSION INHIBITOR**

(71) Applicant: Oleon N.V., 9940 Ertvelde (BE)
(72) Inventor: GABRIËLS, Dries, 3020 VELTEM-BEISEM (BE); ZITOUNI, Karima, 91420 MORANGIS (FR)
(74) Representative: Santarelli

(57) **Abstract**

The present invention relates to a composition of amide(s), its ability to solubilize in saline water and to emulsify it and to a process for recovering crude oil from a subterranean hydrocarbon containing formation using it.

## Description

The present invention relates to a composition of specific amides that can be used as surfactants in the field of enhanced oil recovery.

Enhanced oil recovery (EOR), also called tertiary oil recovery, is the extraction of the remaining crude oil from a reservoir by means complementary to the injection of water.

Indeed, after primary and secondary (i.e. waterflooding) recoveries, a large portion, around 65% of oil is still left in the reservoir.

In order to jointly recover the oil under the action of pressure and overcome capillary forces by strongly reducing the water/oil interfacial tension, surfactant(s) are added to the injection brine.

The problem with many of the currently used surfactants in tertiary oil recovery is that they are incompatible with the brines containing high contents of total dissolved solids (TDS) and divalent cations that are often found at the injection site. Costly water treatment processes or using an alternate fresh water source makes the tertiary oil recovery process economically unfeasible in many cases.

Because the injection brine may have a wide range of TDS, especially divalent cations such as those of calcium and magnesium, it is important to have surfactants that are compatible with different brine contents.

Therefore, there is still a need for a surfactant for use in enhanced oil recovery that is tolerant to the high TDS and divalent cations content in water.

In particular, there is a need for a surfactant presenting one or more of the following characteristics:
- effective at reservoir temperatures above 60°C;
- effective in salinities of at least 200000 ppm;
- compatible with high calcium concentrations, as high as 30000ppm;
in order to be compatible with the temperature of the reservoir and with most brines available for enhanced oil recovery.

The invention relates thus to a composition comprising amide(s) of Formula I, 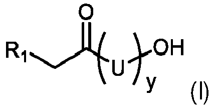 wherein:
- R₁ represents a linear hydrocarbon chain, saturated or unsaturated, straight or branched, comprising from 2 to 22 carbon atoms, optionally substituted with an hydroxyl group, a ketone group, an ether group or an ester group;
- y is an integer from 1 to 20;
- each U, identical or different, is of Formula II 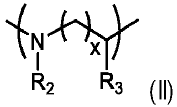 wherein:
   - R₂ represents an hydrogen, an alkyl, straight or branched, comprising from 1 to 4 carbon atom(s), an hydroxyalkyl comprising from 2 to 4 carbon atoms;
   - R₃ represents an hydrogen or an alkyl comprising 1 or 2 carbon atom(s);
   - x is an integer from 1 to 3;
wherein the quantity of amide(s) of Formula I with y of at least 3 in said composition, is more than 30 wt%, percentage by weight being based on the weight of the composition.

In the present application, unless otherwise indicated, all ranges of values used are to be understood as being inclusive limits.

Preferably, R₁ is not substituted or substituted with an hydroxyl group or an ester group, more preferably, R₁ is not substituted.

Preferably, R₁ is a linear straight hydrocarbon chain.

Preferably, R₁ comprises at most one unsaturation.

Preferably, the linear hydrocarbon chain represented by R₁ comprises from 4 to 16 carbon atoms.

Since each U, in an amide of Formula I, can be identical or different, then R₂, R₃ and x may be independently identical or different in each unit U of Formula I.

Preferably, the hydroxyalkyl represented by R₂ is an hydroxyethyl, an hydroxypropyl, a 2-hydroxypropyl or a 2-hydroxybutyl.

Preferably, R₂ represents a methyl, an hydroxyethyl or an 2-hydroxypropyl, more preferably a methyl or an hydroxyethyl.

Preferably, R₃ represents an hydrogen or a methyl, more preferably an hydrogen.

Preferably, x is equal to 1 or 2, more preferably is equal to 1.

Preferably, the composition according to the invention comprises a mixture of amides of Formula I.

The amide(s) of Formula I may comprise up to 20 units U of Formula II, identical or different.

Preferably, y is an integer from 1 to 10, more preferably from 1 to 5.

Preferably, for any y ≥2, at most two different U of Formula II are present in an amide of Formula I.

Advantageously, in the composition according to the invention, amide(s) of Formula I comprises at least one U of Formula II with R₂ representing an hydroxyethyl, R₃ representing an hydrogen and x=1.

The composition according to the invention comprises preferably at least 40 wt%, more preferably at least 45 wt% of amide(s) of Formula I with y of at least 3. In particular, the composition according to the invention comprises at least 30 wt% of amide(s) of Formula I wherein y is equal to 3.

Indeed, the larger the quantity of amide(s) of Formula I with y≥3, the better is the compatibility of the composition according to the invention with high salinity, in particular high calcium concentrations, and better is the stability of the composition according to the invention at high temperatures.

Advantageously, the composition according to the invention, further comprises ester(s) of formula III 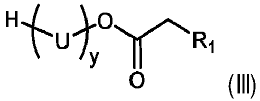 wherein R₁, U, including R₂, R₃ and x, and y are as described above.

Preferably, the quantity of ester(s) of Formula III is lower than 20 wt%, more preferably lower than 10 wt%, even more preferably lower than 5 wt% based on the weight of the composition.

By "quantity of ester(s) of Formula III", it is intended the weight of all ester molecules of Formula III present in the composition according to the invention.

The quantity of amide(s) of Formula I and of ester(s) of Formula III with y=1 is preferably less than 30 wt%, more preferably at most 25 wt% based on the weight of the composition.

By "quantity of amide(s) of Formula I and of ester(s) of Formula III with y=1", it is intended the weight of all amide molecules of Formula I with y=1 and all ester molecules of Formula III with y=1 present in the composition according to the invention.

The quantity of amide(s) of Formula I and of ester(s) of Formula III with y=2, is preferably less than 45 wt% based on the weight of the composition.

By "quantity of amide(s) of Formula I with y=2 and of ester(s) of Formula III with y=2", it is intended the weight of all amide molecules of Formula I with y=2 and all ester molecules of Formula III with y=2 present in the composition according to the invention.

Preferably, the composition according to the invention comprises between 10 and 40 wt%, more preferably, between 10 and 30 wt%, of amide(s) of Formula I and of ester(s) of Formula III with y =2.

A preferred composition according to the invention, comprises:
- less than 25 wt% of amide(s) of Formula I and ester(s) of Formula III with y =1;
- less than 40 wt% of amide(s) of Formula I and ester(s) of Formula III with y =2; and
- at least 40 wt% of amide(s) of Formula I with y of at least 3.

A particularly preferred composition according to the invention, comprises:
- 5-25 wt% of amide(s) of Formula I and ester(s) of Formula III with y =1;
- 10-40 wt% of amide(s) of Formula I and ester(s) of Formula III with y =2; and
- 40-85 wt% of amide(s) of Formula I and ester(s) of Formula III with y of at least 3;
wherein the quantity of ester(s) of Formula III is lower than 10 wt% based on the weight of the composition.

Advantageously, in the composition according to the invention, the degree of oligomerization of amide(s) of Formula I and ester(s) of Formula III is more than 2.

The degree of oligomerization is the average of the y-values, the number of unit U of Formula II, of all the amide(s) of Formula I and ester(s) of Formula III molecules included in the composition according to the invention.

Preferably, the degree of oligomerization is of at least 2.2.

Indeed, the higher the degree of oligomerization, the better the solubility of the composition according to the invention in high salinity, even at elevated temperatures.

The invention also relates to a process for preparing a composition according to invention, comprising the following steps:
- reacting fatty acid(s) with alkanolamine(s), wherein the reaction is conducted in the presence of a molar excess of alkanolamine(s) relative to the fatty acid(s) and at a pressure equal to or below 50000 Pa, preferably from 10 to 50000 Pa, such as from 2000 to 50000 Pa (20 to 500 mBar);
- separating the amide(s) of Formula I and optionally ester(s) of Formula III with y ≥3, from other amide(s) of Formula I and ester(s) of Formula III with y=1 and y=2.

All the quantity of reactants can be directly placed in a reactor and can be reacted in one step.

Preferably, the molar equivalent of alkanolamine(s) is of at least 1.5, more preferably of at least 2.

Preferably, the molar equivalent of alkanolamine(s) is of at most 6, more preferably of at most 4 equivalents of alkanolamine(s).

Preferably, the molar equivalent of alkanolamine(s) is comprised between 1.5 and 6, such as between 1.5 and 4; more preferably between 2 and 6, such as between 2 and 4.

Advantageously, in the process for preparing a composition according to the invention, the reaction is conducted at a temperature between 100 and 160°C.

Preferably, the reaction is conducted at a temperature between 140 and 150°C.

A catalyst may be added to speed up the reaction.

In the process for preparing a composition according to the invention, the reaction time is of at least 15 hours, preferably, at least 20 hours.

In the process for preparing a composition according to the invention, the step of reacting fatty acid(s) with alkanolamine(s) can be conducted in two sub-steps:
- a first sub-stepwherein the reaction is conducted at a pressure from above 5000 to 50000 Pa (50 to 500 mBar) to obtain a reaction mixture, and,
- once the reaction mixture reached an acid value of 50, a second sub-step wherein the pressure is reduced to a pressure from 1000 to 5000 Pa (10 to 50 mBar).

In the present application, the acid values were measured according to standard AOCS Cd 3D-63.

This further reduction of the pressure allows removing water and displacing the reaction equilibrium towards the amide(s)/ester(s) formation.

Alternatively, in the process for preparing a composition according to the invention, the step of reacting fatty acid(s) with alkanolamine(s) can be conducted at a same pressure equal to or below 50000 Pa (500 mBar) during the whole reaction time, preferably below 30000 Pa, more preferably below 10000 Pa, still more preferably below 5000 Pa.

In the process for preparing a composition according to the invention, the fatty acid(s) is advantageously lauric acid, myristic acid, capric acid and/or caprylic acid.

Lauric acid is a 12 carbon chain fatty acid, myristic acid is a 14 carbon chain fatty acid, capric acid is a 10 carbon chain fatty acid and caprylic acid is a 8 carbon chain fatty acid.

In a first preferred embodiment, the fatty acid(s) is lauric acid.

In a second preferred embodiment, the fatty acid(s) are fatty acids resulting from coconut oil. As an example, fatty acids can result from hydrolyzation of coconut oil. Once hydrolyzed, the resulting mixture of fatty acids is particularly rich in lauric acid.

Preferably, alkanolamine(s) is/are selected from the group consisting of diethanolamine, N-methylethanolamine, monoethanolamine, monopropanolamine, monoisopropanolamine, mono-sec-butanolamine, di-sec-butanolamine, dipropanolamine, diisopropanolamine, N-methylpropanolamine, N-methyl-isopropanolamine, N-methyl-sec-butanolamine, N-ethyl-ethanolamine, N-ethyl-propanolamine, N-ethyl-isopropanolamine, N-ethyl-sec-butanolamine, N-propyl-ethanolamine, N-propyl-propanolamine, N-propyl-isopropanolamine, N-propyl-sec-butanolamine, N-isopropyl-ethanolamine, N-isopropyl-propanolamine, N-isopropyl-isopropanolamine, N-isopropyl-sec-butanolamine and mixtures thereof.

Preferably, once the reaction is completed, the excess of alkanolamine(s) and optionally fatty acid(s) is removed, preferably by distillation.

The reaction mixture thus obtained comprises a mixture of amides of Formula I and esters of Formula III, wherein amides of Formula I with y≥3 represent less than 30 wt% based on the weight of the reaction mixture.

To obtain a composition according to the invention, amides of Formula I with y=1, y=2 and y≥3 of the reaction mixture, need to be separated.

The separation step can be performed via a passage on a mineral substrate.

The passage on a mineral substrate can be a chromatography, such as an adsorption chromatography on silica column, carried out using adapted solvents. Such solvents are known to the man skilled in the art.

First, amide(s) of Formula I and esters of Formula III with y=1 are eluted, followed by amide(s) of Formula I and ester(s) of Formula III with y=2, and finally the amide(s) of Formula I and ester(s) of Formula III with y≥3.

Identification of products was determined by GC-MS.

Thus, last products are collected and the solvents are removed under reduced pressure to obtain a composition according to the invention.

A second passage on a mineral substrate can be performed to isolate the amide(s) of Formula I and ester(s) of Formula III with y≥3 from remaining amide(s) of Formula I and ester(s) of Formula III with y=1 and 2.

As shown by Example 5, the composition according to the invention solubilizes in water comprising different type of salts.

The invention also relates to a solution comprising a composition according to the invention, water and a salt.

Preferably, the salt(s) is/are selected among the group consisting of sodium, chloride, magnesium, calcium, potassium, hydrogenocarbonate, sulfate and mixture thereof.

The quantity of the composition according to the invention in the solution is preferably of at least 0.001 wt%, more preferably at least 0.01wt%, even more preferably at least 0.1 wt% based on the weight of the solution.

The quantity of the composition according to the invention in the solution is preferably of at most 10 wt%, more preferably, at most 5 wt% based on the weight of the solution.

More particularly, the quantity of the composition according to the invention in the solution is comprised between 0.001 and 10 wt%, such as 0.001 and 5 wt%, preferably between 0.01 and 10 wt%, such as 0.01 and 5 wt%, more preferably between 0.1 and 10 wt%, such as between 0.1 and 5 wt%, based on the weight of the solution.

The quantity of water is preferably of at least 70 wt%, more preferably of at least 75 wt%, even more preferably of at least 80 wt%, based on the weight of the solution.

Advantageously, the solution according to the invention, further comprises a water soluble organic solvent.

A water soluble organic solvent may be used to better solubilize the composition according to the invention when very high quantities of salts are present in water.

The water soluble organic solvent, is preferably an alcohol.

In particular, the alcohol is a monohydric or dihydric alcohol comprising from 1 to 6 carbon atoms, optionally alkoxylated with an alkoxy group comprising from 2 to 4 carbon atoms, or an aromatic alcohol comprising from 6 to 10 carbon atoms, optionally alkoxylated with an alkoxy group comprising from 2 to 4 carbon atoms.

More particularly, the alcohol is methanol, ethanol, propanol, butanol, isopropanol, ethyleneglycol, propyleneglycol, ethoxylated butanol, ethoxylated phenol or ethoxylated benzylalcohol.

The solution according to the invention may further comprise some additives, such as a viscosifier.

Advantageously, the solution according to the invention, further comprises an hydrophobic organic compound.

The hydrophobic organic compound is preferably a linear or branched alkane, a cycloalkane, an aromatic hydrocarbon or a mixture thereof such as crude oil.

A crude oil typically comprises linear and branched alkanes (paraffins), cycloalkanes (naphthenes) and aromatic hydrocarbons.

Advantageously, the solution according to the invention comprising an hydrophobic organic compound, is in the form of an emulsion.

More particularly, the emulsion is a Winsor III microemulsion.

Indeed, Example 4 shows that the composition according to the invention can form a Winsor III microemulsion, when it is in the presence of saline water and hydrophobic organic compounds.

The emulsion is stable, even at temperature up to 60°C.

The invention also concerns an use of the composition according to the invention, as a surfactant to emulsify saline water, and a hydrophobic organic compound.

The hydrophobic organic compound is as defined above.

The invention thus concerns a method of forming an emulsion, by mixing the composition according to the invention with saline water and an hydrophobic organic compound.

The hydrophobic organic compound is as defined above.

More particularly, the emulsion is a Winsor III microemulsion.

The emulsion thus obtained is stable, even at temperature up to 60°C.

The quantity of the composition according to the invention in the use and the method according to the invention is preferably of at least 0.001 wt% based on the weight of saline water.

In addition to the good ability to solubilize in saline water and to its emulsion ability, the composition according to the invention presents surface active properties.

As shown by Examples 2 and 3, the compositions according to the invention substantially reduce the interfacial tension between saline water and n-octane and the surface tension of water.

All those properties make the composition according to the invention particularly suitable for a tertiary oil recovery process.

The invention also relates to a process for recovering crude oil from a subterranean hydrocarbon containing formation, comprising a step of injection of a solution comprising the composition according to the invention, water, a salt and optionally a water soluble organic solvent, into said formation.

The solution and the composition according to the invention are as described above, including preferential and advantageous features.

Crude oil is then recovered. Indeed, once the solution is injected into the formation, the interfacial tension between saline water and the crude oil is reduced, which consequently reduces the capillary forces, thus mobilizing more crude oil.

Then, the solution comes out of the formation with crude oil.

The crude oil and the saline water of the solution are separated, optionally by addition of a demulsifier.

The saline water can then be reinjected, optionally after addition of a composition according to the invention.

Finally, the invention concerns the use of the composition according to the invention, as an inhibitor of corrosion.

The composition according to the invention can be used as an inhibitor of corrosion in various industrial applications. In particular, it can be used in any type of product where it is usual to add a corrosion inhibitor, such as lubricating compositions (engine oil, hydraulic fluid, gear oil, metalworking fluid), fuels (gasoline, liquefied petroleum gas (LPG), diesel oil, domestic fuel, jet fuels, heavy fuel oils, fuels for marine diesel engines, kerosene), bitumen, vaselines, waxes.

The quantity of the composition according to the invention is preferably of at least 0.1 wt%, more preferably at least 0.3 wt% based on the weight of the lubricating composition or the fuel.

Thus the invention concerns a method of protection of a metal surface from corrosion, by contacting the metal surface with the composition according to the invention.

Preferably the metal is a ferrous metal, advantageously iron or steel.

The invention is further described in the following examples. It will be appreciated that the invention as claimed is not intended to be limited in any way by these examples.

### Example 1: Preparation of compositions according to the invention and of comparative compositions

### 1. Chemicals used

- Fatty acids:
   ∘ Fatty acids from coconut oil (coco FA): Radiacid^{®} 0628 from Oleon;
   ∘ Lauric acid (C12) from Sigma-Aldrich
   ∘ Oleic acid (C18:1) : Radiacid^{®} 0254 from Oleon;
- Alkanolamines:
   ∘ Diethanolamine (DEA) from Helm, (CAS: 111-42-2); it is composed of more than 98.5 wt. % of DEA, less than 1.3 wt. % of monoethanolamine (MEA) and less than 1 wt. % of triethanolamine (TEA);
   ∘ N-methyl ethanolamine (NMEA) from Sigma-Aldrich.

### 2. Method

In a reactor, 2.0 mol of fatty acid(s) and 4.0 mol of alkanolamine(s) (2 molar equivalents) were introduced at the same time. Progressively, the reaction mixture was brought to 150°C with stirring and the pressure was reduced to 20000 Pa (200 mBar) for about 10 hours. Once acid value reached 50 mg KOH/g, the pressure was reduced to 2000 Pa (20 mBar) for another 10 hours.

The reaction mixture was distilled to remove excess of alkanolamine(s) and optionally fatty acid(s).

Then, the amides of Formula I with y=1, y=2 and y≥3, of the reaction mixture thus obtained, were separated by flash chromatography, using a solvent mixture of 80vol% dichloromethane and 20vol% dried ethanol. Once the first product fraction started eluting, the percentage of ethanol in the solvent mixture was gradually increased, finally up to 100%.

The solvents were removed from the collected products under reduced pressure.

First fraction collected comprised mainly the amides of Formula I with y=1, intermediate fraction comprised mainly the amides of Formula I with y=2, and last fraction comprised the amides of Formula I with y≥3.

Thus, last fraction forms a composition according to the invention, and first fraction forms a comparative composition.

Identification of the compounds in the resulting composition according to the invention was determined by GC-MS and quantification of compounds by GC-FID.

The composition 1 according to the invention obtained from coco FA and DEA comprises:
17 wt% of, amides of Formula I with y=1 (N,N-bis(2-hydroxyethyl)alkylamides), and of esters of Formula III with y=1 (2-((2-hydroxyethyl)amino)ethyl-alkanoate), wherein in both Formulas, x=1, R² represents an hydroxyethyl, R³ represents an hydrogen and each R¹ comprises from 4 to 16 carbon atoms;
18 wt% of amides of Formula I with y=2 (N-(2-bis(2-hydroxyethyl)amino)ethyl)-N'-(2-hydroxyethyl)alkylamides) and esters of Formula III with y=2 (2-((2-(bis(2-hydroxyethyl)amino)ethyl)amino)ethyl-alkanoate) wherein in both Formulas, x=1, R² represents an hydroxyethyl, R³ represents an hydrogen and each R¹, comprises from 4 to 16 carbon atoms;
46 wt% of amides of Formula I with y=3 and esters of Formula III with y=3, wherein in both Formulas, x=1, R² represents an hydroxyethyl, R³ represents an hydrogen and each R¹ comprises from 4 to 16 carbon atoms;
15 wt% of amides of Formula I with y=4 and esters of Formula III with y=4, wherein in both Formulas, x=1, R² represents an hydroxyethyl, R³ represents an hydrogen and each R¹ comprises from 4 to 16 carbon atoms;
4 wt% of amides of Formula I with y=5 and esters of Formula III with y=5, wherein in both Formulas, x=1, R² represents an hydroxyethyl, R³ represents an hydrogen and each R¹ comprises from 4 to 16 carbon atoms;
the wt% being with respect to the weight of the composition.

The quantity of esters of Formula III of this composition 1 is of 2.7 wt%, based on the weight of the composition.

The quantity of esters was determined by infrared (IR) spectroscopy based on the carbonyl stretch signals, carbonyl of amides absorbing at 1620cm⁻¹ and carbonyl of esters at 1740cm⁻¹.

The degree of oligomerization of this composition 1 is 2.7, based on the weight-average of different amides and esters of the composition.

The type of fatty acid(s) and alkanolamine(s) used for each composition according to the invention thus prepared are gathered in Table 1 below, and their resulting contents are described in Table 2 below.

**Table 1: Compositions 1-4 according to the invention and comparative compositions 1-2**

| | Alkanolamine(s) | Fatty acid(s) |
|---|---|---|
| Composition 1 | DEA | Coco FA |
| Composition 2 | DEA | C12 |
| Composition 3 | DEA | C18:1 |
| Composition 4 | DEA/NMEA 50/50 | C12 |
| Comparative composition 1 | DEA | Coco FA |
| Comparative composition 2 | DEA | C12 |

**Table 2: Compositions 1-4 according to the invention and comparative compositions 1-2**

| | Degree of oligomerization | Quantity of amides of Formula I and esters of Formula III (wt%*) | | | Quantity of ester(s) of Formula III (wt%*) |
|---|---|---|---|---|---|
| | | with y=1 | with y=2 | with y≥3 | |
| Composition 1 | 2.7 | 17 | 18 | 65 | 2.7 |
| Composition 2 | 3.1 | 9 | 17 | 74 | 3.7 |
| Composition 3 | 2.3 | 23 | 31 | 46 | 1.4 |
| Composition 4 | 2.5 | 14 | 38 | 48 | 2.3 |
| Com parative composition 1 | 1.0 | 99 | 1 | 0 | 1.0 |
| Com parative composition 2 | 1.0 | 98 | 2 | 0 | 1.0 |

| | | | | | |
|---|---|---|---|---|---|
| *wt% are based on the weight of the composition | | | | | |

### Example 2: Interfacial tension of solutions according to the invention

### 1. Preparation of solutions 1-4 according to the invention

Synthetic sea water was prepared by adding under magnetic stirring NaCl, KCI, CaCl₂.2H₂O, MgCl₂.6H₂O, MgSO₄.7H₂O, NaHCO₃ into demineralized water in order to obtain a composition comprising 11000 ppm of Na⁺, 400 ppm of K+, 430 ppm of Ca²⁺, 1370 ppm of Mg²⁺, 20100 ppm of Cl⁻, 2700 ppm of SO4²⁻ and 120 ppm of HCO³⁻.

Solutions 1-4 were prepared at 20°C by mixing synthetic sea water and 1 wt% of a composition according to the invention, manually to attain homogeneity.

### 2. Measurement of interfacial tension of solutions according to the invention

The interfacial tension was determined using a Kruss SDT spinning drop tensiometer. The capillary tube was filled with the solutions 1-4 prepared above. Then 1 drop of n-octane (using a micro syringe) was added to the tube and the interfacial tension was determined after 5 minutes of spinning.

Results are gathered in Table 3 below:

**Table 3: Interfacial tension of solutions 1-4 according to the invention**

| | Composition according to the invention comprised in the solution | Interfacial tension (mN/m) |
|---|---|---|
| Solution 1 | 1 | 1.30 |
| Solution 2 | 2 | 1.90 |
| Solution 3 | 3 | 0.09 |
| Solution 4 | 4 | 1.10 |

The interfacial tension between the synthetic sea water and n-octane is around 50 mN/m.

The data provided in Table 3 thus demonstrate the ability of compositions 1-4 to reduce significantly the interfacial tension between saline water and oil, up to very low values, such as below 2 and even below 1 with composition 3.

### Example 3: Surface tension of solutions according to the invention

### 1. Preparation of solutions 5-8 according to the invention

Solutions 5-8 were prepared at 20°C by diluting respectively 0.1 wt% of composition 1-4 according to the invention into demineralized water. Each solution was shaken for 15 minutes to ensure homogeneity.

### 2. Measurement of surface tension

Surface tension measurements were done on a Krüss K10ST digital tensiometer using the du Noüy ring method at 20°C.

Results are gathered in Table 4 below:

**Table 4: Surface tension of solutions 5-8 according to the invention**

| | Composition according to the invention comprised in the solution | Surface tension (mN/m) |
|---|---|---|
| Solution 5 | 1 | 32.7 |
| Solution 6 | 2 | 28.5 |
| Solution 7 | 3 | 32.5 |
| Solution 8 | 4 | 29.9 |

The surface tension of pure water is 72.8 mN/m. The values provided in Table 4 demonstrate the surface active nature of the compositions in that they significantly reduce the surface tension of water.

### Example 4: Microemulsions

Solutions 9-12 according to the invention were prepared by adding 5 wt% of NaCl and 5 wt% of respectively composition 1-4 according to the invention into demineralized water, weight percentages being based on the weight of water.

5 mL of each solution was put in contact with 5 mL of organic solvents comprising a mixture of toluene and n-hexadecane. The content of the organic solvents was varied from 10 to 90 wt% of toluene in n-hexadecane, wt% being based on the total weight of the organic solvents. Thus, each solution was added to eight different mixtures of organic solvents comprising respectively a weight fraction of toluene in n-hexadecane of 0%, 12.5%, 25%, 37.5%, 50%, 62.5%, 75% and 100%.

Each resulting solution was briefly mixed manually and stored at 60°C for 4 hours.

For each solution 9-12 according to the invention, Winsor III microemulsions were obtained in combination with at least one of the eight organic solvent mixtures.

Indeed, for each solution according to the invention, three separate phases were visually observed with an intermediate phase formed between the aqueous phase and organic phase comprising the organic solvent mixture.

This indicates the potential of amides of Formula I for the formation of Winsor III type microemulsions between an aqueous phase containing salt and an organic phase.

After 96 hours at 60°C, the microemulsions were still present, meaning they are stable at 60°C.

### Example 5: Solubility of the compositions according to the invention into water comprising salts

### 1. Preparation of solutions comprising sea salt

Solutions 13 and 14 according to the invention were prepared by diluting in demineralized water, 230000ppm of NaCl or salts of the synthetic sea water as prepared in Example 2.1 (comprising 11000 ppm of Na⁺, 400 ppm of K+, 430 ppm of Ca²⁺, 1370 ppm of Mg²⁺, 20100 ppm of Cl⁻, 2700 ppm of SO₄²⁻ and 120 ppm of HCO³⁻) and 1 wt% of respectively composition 1 or 2 according to the invention. The solutions were mixed until homogeneous.

Then the solutions were heated to 40°C or 80°C for 1 hour. Their aspect was then visually controlled.

The comparative solutions 1 and 2 were obtained according to method and quantities described above for solutions 13-14 using comparative compositions 1-2 instead of composition 1-2 according to the invention.

The appearance of the solutions are gathered in Table 5.

**Table 5: Solubility of compositions according to the invention into saline waters**

| | Composition comprised in the solution | No salt | NaCl (230000ppm) | NaCl (230000ppm) | Sea salt |
|---|---|---|---|---|---|
| | | 40°C | 40°C | 80°C | 80°C |
| Solution 13 | 1 | clear | clear | clear | clear |
| Solution 14 | 2 | clear | clear | clear | clear |
| Com parative solution 1 | Com parative 1 | hazy | heterogeneous | heterogeneous | heterogeneous |
| Com parative solution 2 | Com parative 2 | hazy | heterogeneous | heterogeneous | heterogeneous |

It can be observed that solutions according to the invention can solubilize in different saline waters, such as brine comprising 230000 ppm of NaCl and synthetic sea water comprising a mixture of salts including divalent cations. And this ability to solubilize is maintained even at high temperatures, such as at 80°C.

Comparative solutions comprising no amide of Formula I with y=3 can hardly solubilize in water at 40°C, and cannot solubilize in saline waters.

### 2. Preparation of solutions comprising calcium salt

Solution 15 according to the invention was prepared by diluting in demineralized water 110 g/L of CaCl₂.2H₂O (30000ppm of Ca²⁺) and 1 wt% of composition 2 according to the invention. The solution was mixed until homogeneous.

Comparative solution 3 was prepared according to method and quantities described above for solution 15 using comparative composition 2 instead of the composition 2 according to the invention.

Then the solutions were heated to 80°C for 1 hour.

Their aspect was then visually controlled and are reported in Table 6 below.

**Table 6: Solubility of composition according to the invention into water comprising calcium salt**

| | Composition comprised in the solution | Ca²⁺ (30000ppm) |
|---|---|---|
| | | 80°C |
| Solution 15 | 2 | clear |
| Com parative solution 3 | Comparative 2 | heterogeneous |

It can be observed that composition 2 according to the invention solubilizes completely in water comprising 30000 ppm of Ca²⁺, which is particularly remarkable since it is difficult for a surfactant to solubilize in water comprising divalent cations.

### Example 6: Corrosion inhibition property of the composition according to the invention

Corrosion inhibition was tested on iron chips according to ASTM D4627-92, using water comprising 100 ppm of Ca²⁺.

The breakpoint or the weakest concentration that left no rust stain on the filter paper, for composition 1 according to the invention was found to be as low as 0.3 wt%, based on the weight of saline water.

## Claims

1. Composition comprising amide(s) of Formula I, 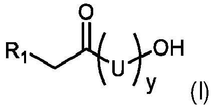 wherein:
- R₁ represents a linear hydrocarbon chain, saturated or unsaturated, straight or branched, comprising from 2 to 22 carbon atoms, optionally substituted with an hydroxyl group, a ketone group, an ether group or an ester group;
- y is an integer from 1 to 20;
- each U, identical or different, is of Formula II 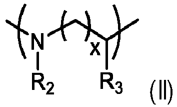 wherein:
- R₂ represents an hydrogen, an alkyl, straight or branched, comprising from 1 to 4 carbon atom(s), an hydroxyalkyl comprising from 2 to 4 carbon atoms;
- R₃ represents an hydrogen or an alkyl comprising 1 or 2 carbon atom(s);
- x is an integer from 1 to 3;
wherein the quantity of amide(s) of Formula I with y of at least 3 in said composition, is more than 30 wt%, percentage by weight being based on the weight of the composition.

2. Composition according to claim 1, wherein amide(s) of Formula I comprises at least one U of Formula II with R₂ representing an hydroxyethyl, R₃ representing an hydrogen and x=1.

3. Composition according to claim 1 or 2, further comprising ester(s) of formula III 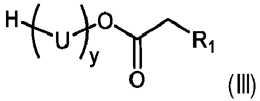 wherein R₁, U, including R₂, R₃ and x, and y are as described in claim 1.

4. Composition according to any of claims 1 to 3, wherein the degree of oligomerization of amide(s) of Formula I and ester(s) of Formula III is more than 2.

5. Solution comprising a composition according to any of claims 1 to 4, water and a salt.

6. Solution according to claim 5, further comprising a water soluble organic solvent.

7. Solution according to claim 5 or 6, further comprising an hydrophobic organic compound.

8. Solution according to claim 7, which is in the form of an emulsion.

9. Use of composition according to any of claims 1 to 4, as a surfactant to emulsify saline water and a hydrophobic organic compound.

10. Method of forming an emulsion, by mixing the composition according to any of claims 1 to 4, with saline water and an hydrophobic organic compound.

11. Process for recovering crude oil from a subterranean hydrocarbon containing formation, comprising a step of injection of a solution according to claim 5 or 6, into said formation.

12. Use of the composition according to any of claims 1 to 4, as an inhibitor of corrosion.

13. Method of protection of a metal surface from corrosion, by contacting the metal surface with the composition according to any of claims 1 to 4.
